# FASCICULE DE BREVET EUROPEEN

(11) **EP 2 514 579 B1**
(45) Date de publication et mention de la délivrance du brevet: **27.11.2013**
(21) Numéro de dépôt: 12163487.7
(22) Date de dépôt: 05.04.2012
(51) Int. Cl.: B29C 45/00, B29C 33/30, B29C 45/04, B29C 45/17, B29C 45/26

(54) **Dispositif de moulage et procédé de mise en oeuvre du dispositif pour la fabrication de relais d'amorçage pyrotechnique**
Formgussvorrichtung und Verfahren zum Einsatz dieser Vorrichtung für die Herstellung von pyrotechnischen Zündungsrelais
Moulding device and method for implementing the device for manufacturing pyrotechnical initiation relays

(30) Priorité: 05.04.2011 FR 1101015
(43) Date de publication de la demande: 24.10.2012
(73) Titulaire: TDA ARMEMENTS S.A.S., 45240 La Ferté Saint-Aubin (FR)
(72) Inventeur: Boucheron, Gilles, 45370 SAINT ANDRE (FR); Amiot, Bernard, 41300 PIERREFITE SUR SAULDRE (FR); Laurent, Davy, 45240 LA FERTE SAINT-AUBIN (FR)
(74) Mandataire: Lucas, Laurent Jacques

(56) Documents cités:
- US-A1- 2008 073 600

## Description

L'invention concerne un outillage industriel destiné à la réalisation par moulage d'éléments en matière polymérisable et en particulier des relais d'amorçage pyrotechniques.

Le moulage de petites pièces notamment en matière plastique ou en matière polymérisable fait appel à différentes techniques et outillages de moulage. Une technique fréquemment utilisée pour des réalisations mono-injection en série est le moulage par injection. Les moules sont constitués le plus souvent de deux coquilles comportant une partie fixe et une partie mobile pressées l'une contre l'autre au moment du moulage. La matière sous forme pâteuse ou liquide est alors injectée à chaud ou à froid dans le moule sous forte pression. Lorsque la matière est solidifiée, par exemple lors de son refroidissement ou d'une polymérisation, les coquilles sont écartées pour extraire la pièce du moule.

Une autre méthode de moulage, cette fois en collectif (ou multi injection par opposition au précédent procédé), permet de mouler plusieurs pièces simultanément par un dispositif de moulage comportant plusieurs alvéoles de moulage ayant la forme des pièces à mouler reliées par des canaux conduisant la matière sous forme pâteuse dans chaque alvéole. Cette autre méthode en collectif nécessite la réalisation d'un dispositif complexe et coûteux pour injecter la matière sous pression afin de bien remplir les alvéoles.

Le document US 2008/073600 A décrit un procédé correspond au même principe général.

Ces types de moulage par injection de matière sous pression comportent des inconvénients tels que des moulages non homogènes et parfois comportant des bulles d'air. En outre, les pièces extraites de ce type de moule en collectif peuvent comporter des petites excroissances dues au canal d'arrivée de la matière dans le moule qu'il faudra par la suite usiner pour obtenir la pièce moulée définitive.

Lorsqu'il s'agit de moulage de matière explosive destinée aux armements tels que les relais pyrotechniques, l'usinage final présente un risque d'inflammation des relais par les frottements ou l'arrachage de matière. Une procédure d'usinage à distance doit être mise en place ce qui augmente encore le coût de fabrication.

Pour palier les inconvénients des dispositifs ou outillages de moulage de l'état de l'art, l'invention propose un dispositif de moulage en collectif d'éléments en matière polymérisable,

Le dispositif de moulage comporte un ensemble de moulage et une cloche destinée à maintenir l'ensemble de moulage sous vide, l'ensemble de moulage ayant un empilage de n plateaux de moulage P1, P2,...Pi,...Pn, selon un axe d'empilement AA', chacun des plateaux de moulage ayant, deux faces principales parallèles, une face principale supérieure et une face principale inférieure, k passages T1, T2,..Tj,...Tk entre sa face principale supérieure et sa face principale inférieure, j étant le rang du passage compris entre 1 et k, les plateaux de moulage pouvant glisser les uns par rapport aux autres dans les plans des faces principales pour être mis, soit dans une position dite d'injection sous vide, dans laquelle les passages T1, T2,..Tj,...Tk sous vide de même rang j des n plateaux de moulage P1, P2,...Pi,...Pn sont alignés pour former k conduits Cd1, Cd2, ...Cdj,...Cdk destinés à être remplis ensemble par la matière polymérisable, soit dans une position dite de fermeture telle que les k dits passages T1, T2,..Tj,...Tk d'un plateau Pi de rang i considéré contenant la matière polymérisable soient fermés d'un côté par la face inférieure du plateau de moulage P(i-1) précèdent et de l'autre côté par la face supérieure du plateau de moulage suivant P(i+1) de l'empilement formant des cavités de la forme des passages contenant la matière polymérisable, l'empilement des n plateaux de moulage étant enserré entre un plateau de distribution de la matière polymérisable dans les passages T1, T2,..Tj,...Tk sous vide et un plateau d'évent pour faciliter l'obtention du vide dans les dits passages et la fermeture, du côte du plateau d'évent, des k conduits Cd1, Cd2, ...Cdj,...Cdk avant l'injection de la matière polymérisable.

Dans une réalisation du dispositif de moulage, le plateau d'évent comporte k trous d'évent E1, E2,..Ej,...Ek tels que, dans une position dite de réalisation du vide dans l'ensemble de moulage, les k trous d'évent sont alignés avec les k passages T1, T2,..Tj,...Tk des n plateaux de moulage P1, P2,...Pi,...Pn, de façon à faciliter l'établissement du vide dans les passages des n plateaux de moulage avant l'injection de la matière polymérisable..

Dans une autre réalisation, le plateau de distribution comporte k canaux d'injections I1, I2 ,...Ij,.. Ik répartis de façon que, dans la position dite d'injection sous vide, les k trous d'injection sont alignés avec les k passages des n plateaux de moulage P1, P2,... Pi,... Pn, de façon à injecter sous vide la matière polymérisable dans les dits k passages.

Dans une autre réalisation, au moins un plateau de moulage Pi de l'empilement des n plateaux de moulage est constitué de w sous plateaux S1, S2,.. St,...Sw, w étant égal ou supérieur à 2, les w sous plateaux étant empilés et rendus solidaires pour former les passages T1, T2,..Tj,...Tk du plateau de moulage Pi.

Dans une autre réalisation, les passages T1, T2,..Tj,...Tk, sont de forme choisie parmi les formes, concaves, convexes, tronconiques ou autres formes diverses.

Dans une autre réalisation, les passages T1, T2,..Tj,...Tk, sont de forme cylindrique d'axe de révolution VV'.

Dans une autre réalisation, le sous plateau de premier rang S1 et le sous plateau de dernier rang Sw ont des passages T1, T2,..Tj,...Tk, de forme tronconique pour former des chanfreins sur les éléments moulés.

Dans une autre réalisation, au moins un plateau de moulage, comporte dans au moins un passage T1, T2,..Tj,...T12, deux demi-coquilles de moulage d'un élément en matière polymérisable de part et d'autre d'un plan passant par l'axe de révolution VV' du passage.

Dans une autre réalisation, les deux demi- coquilles comportent au moins deux bords partiellement en contact pour réaliser un passage entre les deux demi-coquilles pour la matière polymérisable, les dits passages étant configurés pour former des excroissances dans le corps de l'élément moulé ayant une section, dans un plan perpendiculaire au passage, de forme prédéterminée choisie parmi les formes semi sphérique, tronconique, rectangulaire, triangulaire ou autres formes souhaitées.

Dans une autre réalisation, au moins un plateau de moulage, comporte dans au moins un passage T1, T2,..Tj,...T12, une capsule de moulage.

Dans une autre réalisation, les n plateaux de moulage sont de forme cylindrique circulaire, chacun des n plateaux de moulage comportant un trou dans l'axe d'empilement AA' pour le passage d'un arbre d'empilage (40) solidaire, par une de ses deux extrémités, du plateau de distribution (30), un plateau de moulage Pi de rang i étant solidaire en rotation de l'arbre d'empilage, le plateau de moulage précédent P(i-1) ou suivant P(i+1) est libre en rotation par rapport audit arbre d'empilage de façon à produire un glissement d'un plateau de moulage par rapport au suivant et au précédent vers la position dite de fermeture.

Dans une autre réalisation, les n plateaux de moulage sont de forme rectangulaire chacun des plateaux de moulage étant guidé longitudinalement dans un plan parallèle à ses faces principales de façon à produire un glissement d'un plateau par rapport au suivant et au précédent vers la position dite de fermeture.

Dans une autre réalisation, la cloche est de forme cylindrique circulaire de diamètre externe D1, d'axe de révolution CC', comportant, d'une extrémité à l'autre de la cloche, un fond de cloche et un bord de cloche, du côté du fond de cloche une paroi de fond de cloche d'épaisseur H2 comportant un trou lisse débouchant à l'intérieur de la cloche, la paroi de fond de cloche comportant, à l'intérieur de la cloche une surface plane circulaire de diamètre D2 s'élargissant sous forme d'une ouverture de forme conique jusqu'à un diamètre D3 sur une hauteur H3 à l'intérieur de la cloche, l'ouverture conique étant raccordée à une ouverture cylindrique circulaire de diamètre D4 plus grand que le diamètre D3 de l'ouverture conique pour former un épaulement de plateau sur une hauteur H4 comportant des trous de goupilles pour l'insertion de goupilles d'entraînement en rotation du plateau d'évent de l'ensemble de moulage, l'ouverture cylindrique circulaire étant raccordée par un autre épaulement à une dernière ouverture de la cloche de diamètre D5 supérieure au diamètre D4 de l'ouverture cylindrique circulaire et inférieure au diamètre externe D1 de la cloche pour former une paroi de bord de cloche se terminant par le bord de cloche .

Dans une autre réalisation, la paroi de bord de cloche comporte une gorge débouchant à l'intérieur de la cloche contenant un joint de plateau en contact avec un bord circulaire du plateau de distribution pour réaliser l'étanchéité par rapport au milieu externe entre l'ensemble de moulage et la cloche.

Dans une autre réalisation, un insert de fond de cloche comportant une tête plate et un corps cylindrique ayant dans l'axe CC' de révolution un trou taraudé débouchant à l'intérieur de la cloche, l'insert de fond de cloche étant maintenu par un écrou dans le trou lisse du fond de cloche de façon qu'une surface inférieure de la tête de l'insert de fond de cloche vienne en butée avec la surface plane circulaire de la paroi de fond de cloche.

Dans une autre réalisation, l'insert de fond de cloche comporte une butée centrale vissée dans le trou taraudé de l'insert de fond de cloche, le vissage ou le dévissage de la butée centrale dans l'insert de fond de cloche permettant de faire évoluer au cours du cycle de réalisation des éléments moulés, l'appui de la cloche sur l'ensemble de moulage afin de limiter ou au contraire augmenter selon l'opération du cycle effectuée, l'effort de placage des plateaux entre eux.

Dans une autre réalisation, les faces principales des n plateaux de moulage P1, P2,...Pi,...Pn, ainsi que les k passages cylindriques T1, T2,..Tj,...Tk, sont recouverts d'un revêtement anti friction de un ou deux dixièmes de mm, de façon à faciliter le glissement d'un plateau de moulage par rapport à l'autre et le démoulage des éléments moulés.

Dans une autre réalisation, l'élément moulé est un relais d'amorçage pyrotechnique, la matière polymérisable étant une molécule explosive enrobée d'un liant.

L'invention concerne aussi un procédé de moulage mettant en oeuvre un dispositif de moulage en collectif d'éléments en matière polymérisable selon l'invention,
**caractérisé en ce qu'**il comporte au moins les étapes suivantes :
- montage de l'ensemble de moulage par l'empilement des n plateaux de moulage P1, P2, ... Pi, ... Pn enserrés entre le plateau de distribution de matière polymérisable et le plateau d'évent,
- alignement des k passages T1, T2, ..Tj,...Tk, des n plateaux de moulage P1, P2,... Pi,... Pn, les passages Tj de même rang j des n plateaux de moulage étant alignes pour former k conduits Cd1, Cd2, ...Cdj,...Cdk dans les n plateaux de moulage de la matière polymérisable,
- mise en place de la cloche sur l'ensemble de moulage isolant ainsi les plateaux de moulage du milieu extérieur à la cloche,
- réalisation du vide dans la cloche et dans les passages T1, T2,..Tj,...Tk des n plateaux de moulage par aspiration d'air dans la cloche,
- fermeture des conduits Cd1, Cd2, ...Cdj,...Cdk du côté du plateau d'évent par un glissement du plateau d'évent par rapport à l'empilement des n plateaux de moulage P1, P2,...Pi,...Pn,
- injection par le plateau de distribution de la matière polymérisable dans les k conduits Cd1, Cd2, ...Cdj,...Cdk pour former k colonnes respectives C1, C2,...Cj,...Ck de matière polymérisable,
- déplacement des plateaux de moulage les uns par rapport aux autres par glissement sur leurs surfaces principales en contact de façon à sectionner les k colonnes respectives C1, C2,...Cj,...Ck de matière polymérisable formant des cavités Av contenant les éléments moulés en matière polymérisable,
- suppression du vide dans la cloche,
- retrait de la cloche de l'ensemble de moulage,
- polymérisation des éléments dans les cavités formées par les passages cylindriques fermés par les surfaces principales des plateaux de moulage,
- séparation des plateaux de moulage et démoulage des éléments moulés dans les cavités par leur retrait des passages cylindriques des plateaux de moulage.

Dans une réalisation du procédé de moulage, les n plateaux de moulage étant de forme cylindrique circulaire chacun des n plateaux comportant un trou dans l'axe d'empilement AA' pour le passage d'un arbre d'empilage, solidaire par une de ses deux extrémités, du plateau de distribution, un plateau de moulage de rang Pi étant solidaire en rotation de l'arbre d'empilage, le plateau de moulage précédent P(i-1) ou suivant P(i+1) étant libre en rotation par rapport audit arbre,
**caractérisé en ce que** la position de fermeture est obtenue par rotation d'un plateau de moulage Pi par rapport au suivant P(i+1) et au précédent P(i-1).

Dans une autre réalisation du procédé de moulage, les n plateaux de moulage étant de forme rectangulaire et guidés longitudinalement dans un plan parallèle à ses faces principales,
**caractérisé en ce que** la position de fermeture est obtenue par le glissement d'un plateau de moulage Pi par rapport au suivant P(i+1) et au précédent P(i-1).

L'idée de cette invention est d'injecter sous vide de la matière polymérisable dans des passages de plateaux de moulage indexés puis de faire glisser ces plateaux de moulage les uns par rapport aux autres pour obtenir une multitude de cavités comportant les éléments moulés.

Un principal but de ce dispositif est d'obtenir un moulage en grande série d'éléments moulés de formes géométriques quelconques sans retouche ultérieure.

Un autre objectif est de réduire le coût de fabrication des éléments moulés tels que des relais d'amorçage pyrotechniques.

L'invention sera mieux comprise par la description de réalisations d'un dispositif de moulage et du procédé de mise en oeuvre du dispositif selon l'invention en référence aux dessins indexés dans lesquels :
- la figure 1 montre une vue en coupe transversale d'un prototype du dispositif de moulage selon l'invention ;
- la figure 2 montre une vue éclatée en perspective de l'ensemble de moulage du dispositif de moulage de la figure 1 ;
- la figure 3a montre une vue de dessus d'un plateau de moulage du dispositif de moulage de la figure 1 ;
- la figure 3b une vue en coupe axiale du plateau de moulage de la figure 3a ;
- la figure 3c montre une vue partielle en coupe axiale des passages alignés de rang j dans les trois sous plateaux S1, S2, S3 du dispositif de moulage de la figure 1 ;
- la figure 4 montre une vue en coupe axiale de la cloche du dispositif de moulage de la figure 1 ;
- la figure 5 montre une vue éclatée en perspective de la cloche 12 de la figure 4
- les figures 6a et 6b montrent deux exemples de réalisations d'éléments moulés par le dispositif de moulage des figures 1 et 2 ;
- la figure 7a montre une vue en coupe axiale d'une variante du plateau de moulage de la figure 3a ;
- la figure 7b montre une vue de dessus d'une demi-coquille du plateau de la figure 7a ;
- la figure 7c une vue axiale du relais moulé issu du plateau de moulage de la figure 7a ;
- la figure 7d montre un autre relais issu d'un moulage d'un plateau comportant trois sous plateaux ;
- la figure 7e montre un exemple de réalisation de deux demi-coquilles du plateau de la figure 7a ;
- la figure 7f montre une section du relais pyrotechnique résultant du moulage des deux coquilles de la figure 7^{e} ;
- la figure 8 montre une vue en coupe axiale d'une autre variante du plateau de moulage de la figure 3a et ;
- les figures 9a, 9b, 9c et 9d représentent, sous forme de schémas de principe, des principales étapes de mise en oeuvre du dispositif de moulage selon l'invention représenté aux figures 1 et 2.

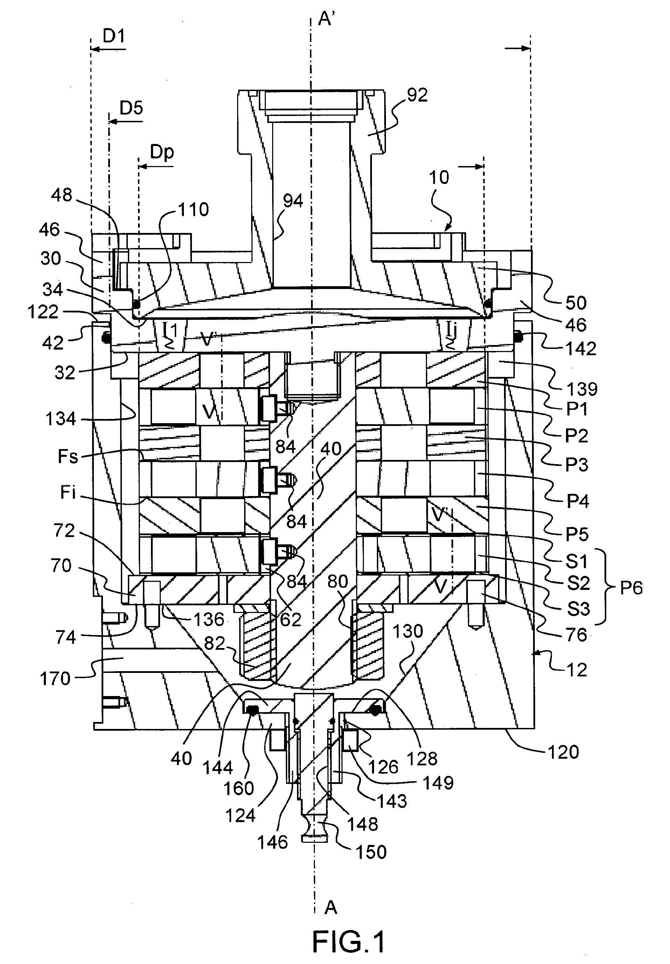

Les figures 1 à 8 montrent un dispositif moulage selon l'invention sous forme de prototype pour démontrer la faisabilité d'obtention de relais en grande série utilisant des plateaux mobiles les uns par rapport aux autres

La figure 1 montre une vue en coupe transversale d'un prototype du dispositif de moulage selon l'invention.

Le dispositif de moulage de la figure 1 comporte essentiellement un ensemble de moulage 10 et une cloche 12 en matière transparente contenant l'ensemble de moulage sous vide.

Dans l'exemple de réalisation représenté à la figure 1, le dispositif de moulage permet la réalisation en collectif de 72 relais pyrotechniques sous forme de cylindres de section circulaire à partir d'une matière polymérisable comportant une molécule explosive.

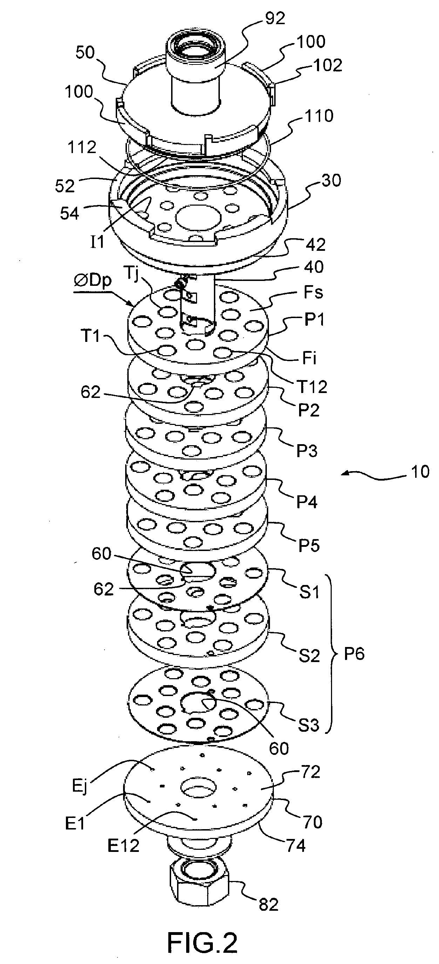

La figure 2 montre une vue éclatée en perspective de l'ensemble de moulage du dispositif de moulage de la figure 1.

L'ensemble de moulage 10 d'axe longitudinal AA' comporte, une partie supérieure et une partie inférieure et, du côte de sa partie supérieure, un plateau de distribution 30 de la matière polymérisable dans l'ensemble de moulage 10. Le plateau de distribution 30 est de forme cylindrique circulaire, d'axe de révolution AA', comportant deux faces principales perpendiculaires audit axe AA', une face d'empilage 32 et une face de distribution 34.

Le plateau de distribution 30 est solidaire, du côte de la face d'empilage 32, d'un arbre d'empilage 40 d'axe de révolution confondu avec l'axe AA'

Le plateau de distribution 30 comporte un bord circulaire 42 de diamètre D5, destiné à être insérée dans une ouverture de la cloche 12 la fermant hermétiquement. Le bord circulaire 42 du plateau de distribution est raccordé à une paroi de serrage 46 en forme de tube circulaire de diamètre plus grand que le diamètre D5 du bord circulaire du plateau de distribution 30 formant un épaulement 48 du côté de la surface intérieure de la paroi de serrage 46 pour le positionnement d'un plateau d'injection 50 de la matière polymérisable dans le plateau de distribution 30

La paroi de serrage 46 du plateau de distribution se termine dans un plan perpendiculaire à l'axe AA' par un bord 52 (voir figure 2) ayant quatre dents horizontales de serrage 54 du plateau d'injection 50 dans le plateau de distribution 30, chacune en forme de portion de couronne, réparties régulièrement sur le bord 52 du plateau de distribution 30 autour de l'axe AA', chaque portion de couronne étant comprise dans un arc de cercle de 45 °.

Entre la partie supérieure et la partie inférieure de l'ensemble de moulage 10, sont empilés sur le plateau de distribution 30 autour de l'arbre d'empilage 40, 6 plateaux de moulage P1, P2, P3, P4, P5, P6 de formes cylindriques circulaires de diamètres Dp. Comme est décrit plus loin dans cette réalisation le plateau P6 est constitué de trois sous plateaux S1, S2, S3 empilés solidaires en rotation.

Les six plateaux de moulage comportent chacun un trou 60 dans leur axe de révolution pour le passage de l'arbre d'empilage 40 et une rainure 62 dans l'épaisseur du plateau destinée à rendre certains plateaux de moulage de l'empilement solidaires en rotation de l'arbre d'empilage 40.

Chacun des six plateaux de moulage P1 à P6 comporte deux faces principales parallèles, une face principale supérieure Fs et une face principale inférieure Fi, 12 passages cylindriques T1, T2,..Tj,...T12, d'axes de révolution VV', entre sa face principale supérieure et sa face principale inférieure, j étant le rang du passage cylindrique compris entre 1 et 12 dans chacun des plateaux de moulage.

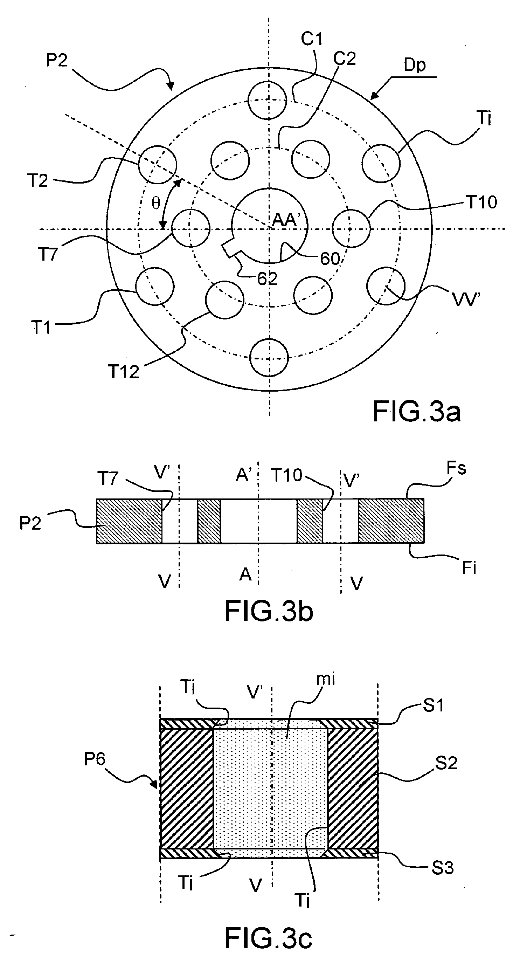

La figure 3a montre une vue de dessus d'un plateau de moulage du dispositif de moulage de la figure 1.

La figure 3b une vue en coupe axiale du plateau de moulage de la figure 3a.

Les passages cylindriques T1, T2,..Tj,...T12 sont distribués régulièrement et de façon identique sur chacun des plateaux de moulage, j compris entre 1 et 12 représente le rang du passage.

Cette architecture de la figure 1, de forme cylindrique, est liée à l'outil industriel d'injection existant de la matière polymérisable utilisé pour la validation d'un prototype du dispositif de moulage tel que décrit. D'autres architectures pourraient assurer les principales fonctions du dispositif de moulage selon l'invention.

Les figures 3a et 3b montrent en particulier le plateau de moulage P2.

Dans cet exemple de réalisation six premiers passages T1, T2, T3, T4, T5, T6 sont distribués par pas angulaire de 60° autour de l'axe du plateau centrés sur un cercle C1 de diamètre d1, six deuxièmes passages T7, T8, T9, T10, T11, T12, décalés d'un angle θ de 30° par rapport aux six premiers passages sont aussi distribués par pas angulaire de 60° autour de l'axe du plateau de moulage centrés sur un cercle C2 de diamètre d2 plus petit que d1.

Dans une position de l'ensemble de moulage 10 dite « position d'injection », les plateaux de moulage P1 à P6 sont positionnés angulairement autour de l'axe de révolution AA' de façon que les axes VV' des passages cylindriques Tj de même rang j des douze plateaux de moulage soient confondus pour être remplis ensemble et former une colonne Cj de matière polymérisable respective de rang j des passages, de la hauteur des douze plateaux de moulage.

L'empilage des six plateaux de moulage P1 à P6 est pris en sandwich entre le plateau de distribution 30 et un plateau d'évent 70 comportant deux faces principales parallèles, une face de serrage 72 du côte de l'empilage et, de l'autre côte du plateau d'évent, une face externe 74.

L'arbre d'empilage 40 comporte à son extrémité libre (voir figure 1), du côte de la partie inférieure de moulage 12, une partie filetée 80.

L'extrémité libre de l'arbre d'empilage 40 est sphérique ce qui permet, lors d'une des étapes du procédé d'utilisation du dispositif de moulage décrite plus loin, au moment de la rotation du plateau d'évent 70 avant injection de la matière polymérisable, d'avoir un contact ponctuel entre cet arbre d'empilage 40 et une butée centrale solidaire de la cloche 12 et donc de réduire au maximum le couple de rotation.

Un écrou 82 vissé sur ladite partie filetée 80 assure le maintient de l'empilage des plateaux de moulage P1, P2, P3, P4, P5, P6, serrés entre le plateau de distribution 30 et le plateau d'évent 70 de façon que la face inférieure Fi d'un plateau de moulage Pi de rang i soit en contact avec la face supérieure Fs du plateau suivant P(i+1).

Dans cette réalisation particulière du dispositif de moulage selon l'invention, représenté à la figure 1, les passages T1, T2,..Tj,...T12 des plateaux de moulages P1, P2, P3, P4, P5 assurent les moulages des relais pyrotechniques de formes cylindriques de section circulaire.

Le plateau P6 assure la réalisation de relais pyrotechniques avec chanfreins. A cet effet, le plateau P6 est constitué de trois sous plateaux S1, S2, S3 rendus solidaires en rotation par des goupilles (ou tout autre artifice assurant cette fonction). Les passages cylindriques T1, T2,..Tj,...T12 dans les sous plateaux S1 et S3 enserrant le sous plateau S2 sont de forme tronconique inversée représentant la forme des chanfreins respectifs de l'une et de l'autre extrémités des 12 relais moulés dans le plateau de moulage P6 et les passages T1, T2,..Tj,...T12 dans les sous plateaux de moulage S2 et S3, les corps cylindriques circulaires des dits 12 relais.

La figure 3c montre une vue partielle en coupe axiale des trois passages Tj alignés de rang j dans les trois sous plateaux S1, S2, S3 du dispositif de moulage de la figure 1, et le relais pyrotechnique mi de rang i moulé dans ces trois passages.

Le démoulage des relais pyrotechniques avec chanfrein pourra s'effectuer sans difficultés par la désolidarisation de ces trois sous plateaux S1, S2 et S3.

Selon une principale caractéristique du procédé de réalisation des relais pyrotechniques, les relais pyrotechniques sont obtenus par le glissement d'un plateau de moulage sur l'autre, dans cette réalisation par rotation autour de l'arbre d'empilage 40, pour effectuer une découpe de chacune des colonnes C1, C2,...Cj,...C12 de matière polymérisable injectée dans les passages alignés T1, T2,..Tj,...T12 des six plateaux de moulage.

A cet effet, dans la réalisation du dispositif de moulage représenté aux figures 1 et 2, l'arbre d'empilage 40 comporte trois vis de blocage 84 en rotation des plateaux de moulage vissées sur l'arbre d'empilage 40 perpendiculairement à l'axe de révolution AA' et positionnées sur la longueur de l'arbre d'empilage 40 de telle façon que lorsque l'empilement des plateaux de moulage est réalisé, les têtes des trois vis 84 se trouvent dans les rainures des plateaux P2, P4, P6 respectifs, les rainures des autres plateaux P1, P3, P5 ne comportant pas de têtes de vis sont alors libres en rotation sur l'arbre d'empilage 40.

Pour effectuer le remplissage de matière polymérisable des passages cylindriques T1, T2,..Tj,...T12 des plateaux de moulage, le plateau de distribution 30 comporte 12 canaux d'injections I1, I2 ... Ij,.. I12 entre sa face d'empilage 32 et sa face de distribution 34 distribués sur ses faces de manière identique à celle des passages cylindriques T1, T2,..Tj,...T12 des plateaux de moulage de façon que, dans la « position dite d'injection » un passage d'injection Ij de rang j soit aligné avec les passages Tj de même rang j dans les six plateaux de moulage. A cet effet, les plateaux de moulage comportent sur leur bord circulaire des repères de positionnement angulaire.

Le plateau d'évent 70 permet d'assurer le maintient de la matière polymérisable dans les passages des plateaux de moulage lors de son injection dans l'ensemble de moulage mais aussi, selon une principale caractéristique du dispositif de moulage selon l'invention, l'aspiration de l'air contenu dans les dits passages des plateaux de moulage pour les mettre sous vide. Le plateau d'évent 70 comporte donc 12 trous d'évent E1, E2,...Ej,...E12 entre sa face de serrage 72 et sa face externe 74 distribués de façon identique à celle des passages cylindriques T1, T2,..Tj,...T12 des plateaux de moulage mais de diamètre inférieur au diamètre des passages cylindriques de façon que, dans une position du dispositif de moulage de réalisation du vide dans la cloche 12, avant injection de la matière polymérisable, un passage d'évent Ej de rang j soit aligné avec les passages Tj de même rang j dans les 12 plateaux de moulage.

Le plateau d'évent 70 comporte, du côte de sa face externe 74, des trous borgnes 76 pour l'insertion de goupilles d'entraînement 137 en rotation avec la cloche 12.

Le plateau d'injection 50 assure l'arrivée de la matière polymérisable sur la face de distribution 34 du plateau de distribution 30 puis dans les 12 canaux d'injections I1, I2 ,...Ij,.. I12 du plateau de distribution 30.

Le plateau d'injection 50, de forme cylindrique circulaire comporte du côté de la partie supérieure de l'ensemble de moulage 10 une arrivée 92 de matière polymérisable sous forme de tube de section circulaire. La surface interne du tube 94 s'élargissant dans l'épaisseur du plateau d'injection 50 sous forme conique pour déboucher sur la face de distribution 34 du plateau de distribution 30 sous forme d'une ouverture circulaire ayant un diamètre englobant la totalité des 12 canaux d'injection I1, I2 ,...Ij,.. I12 du plateau de distribution 30.

Le plateau d'injection 50 comporte à sa périphérie quatre parois de serrage 100 distribuées régulièrement autour de l'axe AA' ayant chacune une butée 102, lesdites parois de serrage 100 pouvant se positionner sous une respective dent horizontale de serrage 54 du bord 52 du plateau de distribution 30 pour effectuer un verrouillage en translation et en rotation du plateau d'injection 50 avec le plateau de distribution 30 solidaire de l'empilage des plateaux de moulage.

Un joint torique 110 dans une gorge 112 sur la périphérie du plateau d'injection 50 assure l'étanchéité avec le milieu extérieur.

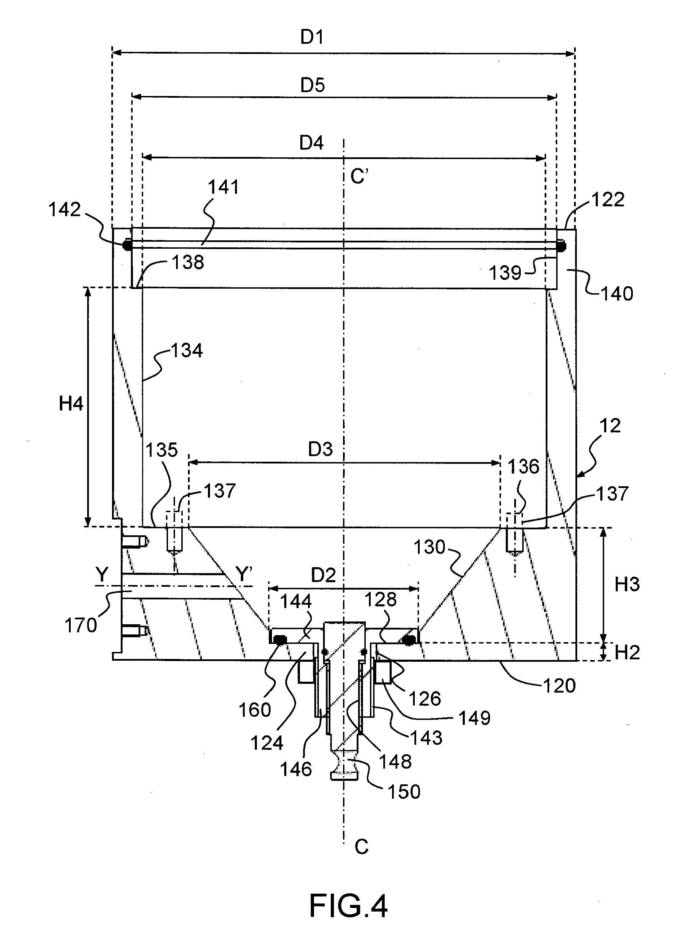

La figure 4 montre une vue en coupe axiale de la cloche du dispositif de moulage de la figure 1.

La cloche 12 est destinée à recevoir l'ensemble de moulage 10 et à maintenir ledit ensemble sous vide lors d'une phase d'injection de la matière polymérisable dans les passages T1, T2,..Tj,...T12 des plateaux de moulage P1, P2, P3, P4, P5, P6. La cloche 12 de forme cylindrique circulaire de diamètre externe D1, d'axe de révolution CC', comporte, d'une extrémité à l'autre de la cloche, un fond de cloche 120 et un bord de cloche 122. Du côté du fond de cloche 120 une paroi de fond 124 de cloche d'épaisseur H2 comporte un trou lisse 126 débouchant à l'intérieur de la cloche. La paroi de fond de cloche 124 comporte, à l'intérieur de la cloche 12 une surface plane circulaire 128 de diamètre D2 s'élargissant sous forme d'une ouverture 130 de forme conique jusqu'à un diamètre D3 sur une hauteur H3 à l'intérieur de la cloche. L'ouverture conique 130 est raccordée à une ouverture cylindrique circulaire 134 de diamètre D4 plus grand que le diamètre D3 de l'ouverture conique pour former un épaulement de plateau 135 sur une hauteur H4 comportant des trous 136 de goupilles pour l'insertion de goupilles d'entraînement 137 rendant solidaires en rotation le plateau d'évent 70 avec la cloche 12. L'ouverture cylindrique circulaire 134 est raccordée par un autre épaulement 138 à une dernière ouverture 139 de la cloche de diamètre D5 supérieure au diamètre D4 de l'ouverture cylindrique circulaire 134 et inférieure au diamètre externe D1 de la cloche pour former une paroi 140 de bord de cloche se terminant par le bord de cloche 122.

La paroi 140 de bord de cloche comporte une gorge 141 débouchant à l'intérieure de la cloche 12 contenant un joint de plateau 142 destiné à être en contact avec le bord circulaire 42 du plateau de distribution pour réaliser l'étanchéité par rapport au milieu externe entre l'ensemble de moulage 10 et la cloche 12

L'effort de placage de la cloche 12 sur l'ensemble de moulage 10, et donc sur les plateaux de moulage, dû au vide dans la cloche, peut être adapté en choisissant le diamètre D5 de la cloche ce qui, selon la matière injectée, peut assurer une meilleure étanchéité inter plateaux. Bien entendu, le diamètre D5 minimum de la cloche doit être compatible avec la valeur minimum du diamètre des plateaux, le diamètre D5 maximum pouvant être choisi d'autant plus grand que l'on souhaite obtenir un effort de placage plus important.

Un insert 143 de fond de cloche comportant une tête plate 144 et un corps 146 cylindrique ayant dans l'axe CC' de révolution un trou taraudé 148 débouchant à l'intérieur de la cloche 12. L'insert 143 de fond de cloche est maintenu dans le trou lisse 126 du fond de cloche 120 avec l'écrou 149 de façon qu'une surface inférieure de la tête de l'insert 143 de fond de cloche vienne en butée avec la surface plane circulaire 128 de la paroi 124 de fond de cloche. L'insert 143 de fond de cloche comporte une butée centrale 150 vissée dans le trou taraudé 148 de l'insert 143 de fond de cloche.

La butée centrale150 peut être mise en contact, à l'intérieur de la cloche 12, avec l'extrémité libre de l'arbre d'empilage 40 pour permettre de faire évoluer au cours du cycle de réalisation des relais, l'appui de la cloche sur l'outillage d'injection afin de limiter ou au contraire augmenter selon l'opération du cycle effectuée, l'effort de placage des plateaux entre eux.

Un joint de fond de cloche 160 entre l'insert 142 de fond de cloche et la paroi 124 de fond de cloche assure, au niveau du fond de cloche, l'étanchéité de la cloche 12 par rapport au milieu ambiant.

La cloche comporte, pour la réalisation du vide dans le dispositif de moulage, un évent 170 d'axe YY' dans l'épaisseur H3 de l'ouverture conique 130.

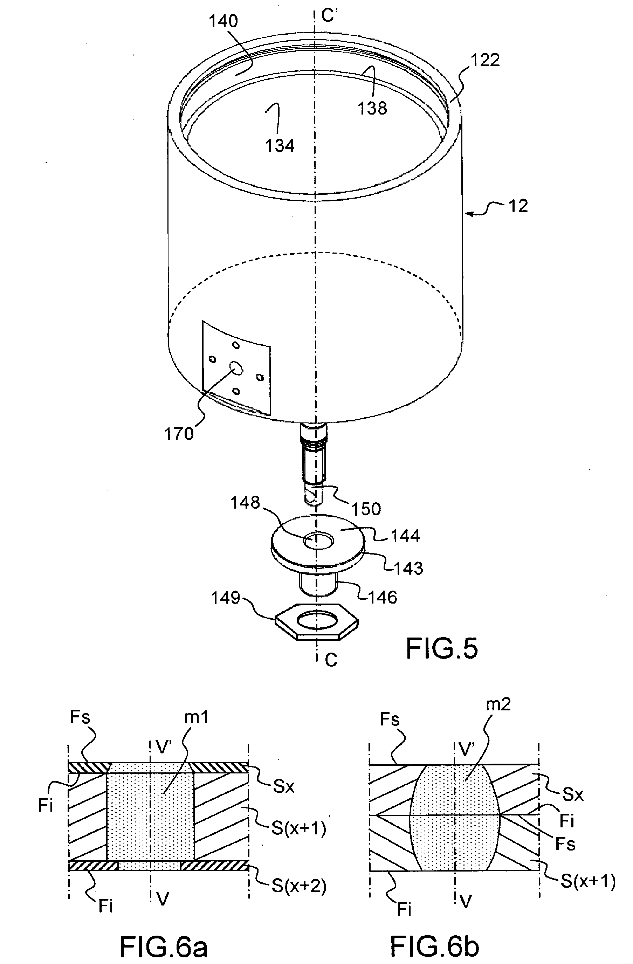

La figure 5 montre une vue éclatée en perspective de la cloche 12 de la figure 4 montrant l'insert 143 de fond de cloche et la butée centrale 150.

Les formes des relais pyrotechniques réalisées par le dispositif de moulage selon l'invention, sont celles d'alvéoles Av formées par le volume compris entre les parois des passages cylindriques T1, T2,..Tj,...T12 dans les plateaux de moulage fermés par les surfaces inférieure et supérieure des plateaux de moulage adjacents après la rotation des plateaux de moulage les uns par rapport aux autres.

Les formes des relais pyrotechniques ne sont pas limitatives à celles de la réalisation des plateaux de moulage des figures 3b et 3c et d'autres formes plus complexes peuvent être réalisées par superposition de plusieurs sous plateaux solidaires en rotation.

Dans une variante du dispositif de moulage, les formes des relais peuvent être obtenues par l'adjonction de deux demi-coquilles dans chaque alvéole. Les deux demi coquilles forment alors un passage permettant ainsi d'injecter des éléments moulés de toutes formes, par exemple en forme de diabolo qui seront facilement démoulables. Dans une autre variante, les formes des relais peuvent être obtenues par des capsules de forme cylindrique circulaire insérées dans les passages des plateaux de moulage. Des passages dans les capsules permettent d'obtenir d'autres formes de relais. En outre, les plateaux de moulage du dispositif de moulage peuvent combiner toutes ces variantes pour obtenir avec le dispositif de moulage selon l'invention différentes formes de relais dans un seul moulage.

Les figures 6a et 6b montrent deux réalisations d'éléments moulés par le dispositif de moulage de la figure 1.

Par exemple la figure 6a montre un élément moulé m1 par trois sous plateaux Sx, S(x+1), S(x+2) solidaires en rotation lors du moulage formant un plateau de moulage unique comportant un chanfrein à 45° du côte du sous plateau Sx et une réduction du diamètre du côte du sous plateau S(x+2), le sous plateau S(x+1) formant le corps cylindrique circulaire du relais m1.

La figure 6b montre la réalisation d'un élément moulé m2 sous forme de tonneau. La forme en tonneau est obtenue par association deux sous plateaux Sx et S(x+1) ayant des passages de forme cylindrique concave assemblés du côté de leur plus grand diamètre.

Dans le cas des moulages des figures 6a et 6b le démoulage des éléments polymérisés est alors effectué en séparant les sous plateaux.

Les sections des passages dans les plateaux ou dans les sous plateaux de moulage peuvent être aussi de formes quelconques, par exemple de section carrée, triangulaire ou autres.

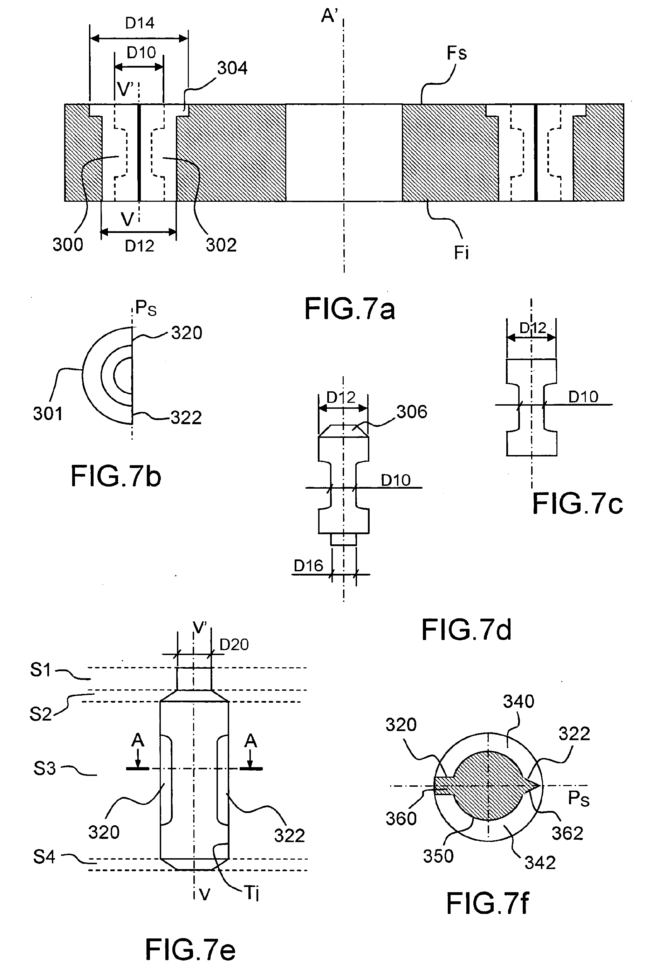

La figure 7a montre une vue en coupe axiale d'une variante du plateau de moulage de la figure 3a.

Dans cette variante de la figure 7a le plateau de moulage P2, par exemple, comporte dans chaque passage T1, T2,..Tj,...T12, deux demi coquilles de moulage 300, 302 de relais ayant un passage cylindrique de diamètre D10 dans une partie centrale des demi coquilles et s'élargissant au diamètre D12, plus grand que le diamètre D10, vers la surfaces inférieure Fi et supérieure Fs du plateau de moulage. Les demi coquilles 300, 302 présentent un bord cylindrique circulaire de diamètre D14 plus grand que le diamètre D12 des deux demi-coquilles venant s'insérer dans un évidement 304 du coté de la surface supérieur Fs du plateau de moulage de façon à réaliser un blocage en position des deux demi coquilles dans le passage du plateau de moulage.

La figure 7b montre une vue de dessus d'une demi-coquille du plateau de la figure 7a. La figure 7c une vue axiale du relais moulé issu du plateau de moulage de la figure 7a.

La figure 7d montre un autre relais issu d'un moulage d'un plateau comportant trois sous plateaux, le plateau de moulage de la figure 7a comportant les deux demi coquilles 300, 302 de moulage enserré entre deux autres sous plateaux pour former un chanfrein 306 d'un côte du relais de la figure 7c et une réduction de diamètre D16 de l'autre côté du relais.

Les deux demi coquilles 301, 302 du plateau de moulage de la figure 7a ont des bords 320, 322 en contact sur toute la hauteur des demi coquilles dans un plan de symétrie Ps.

Dans une variante, les bords 320, 322 de deux demi-coquilles 340, 342 ne sont en contact que sur une ou plusieurs parties de l'épaisseur du plateau, ou d'un sous plateau de moulage, pour former un ou plusieurs passages respectifs de matière polymérisable jusqu'à la surface du passage Tj dans le plateau de moulage.

Dans une autre variante, les bords 320, 322 des deux demi-coquilles sont inclinés au moins sur une partie de l'épaisseur du plateau ou du sous plateau de moulage par rapport au plan de symétrie Ps des demi coquilles.

La figure 7e montre un exemple de réalisation de deux demi-coquilles du plateau de moulage de la figure 7a comportant d'un côte un passage avec des bords 320 parallèles et de l'autre côte des bords 322 inclinés.

Plus précisément la figure 7e montre un plateau de moulage d'un relais pyrotechnique 350 (ou d'une élément moulé de façon générale) réalisé à partie de quatre sous plateau de moulage S1, S2, S3, S4, (représentées en pointillé sur la figure 7e) Le sous plateau de moulage S1 forme un réduction de diamètre D20 du relais 350, les sous plateaux S2 et S4 forment des chanfreins du relais et le sous plateau S3 central comportant les deux demi-coquilles 340, 342 forme le corps du relais 350.

La figure 7f montre une section du relai pyrotechnique 350 résultant du moulage des deux demi-coquilles 340, 342 de la figure 7e comportant, d'un côte, une excroissance 360 de section rectangulaire et de l'autre côté une autre excroissance 362 de section triangulaire.

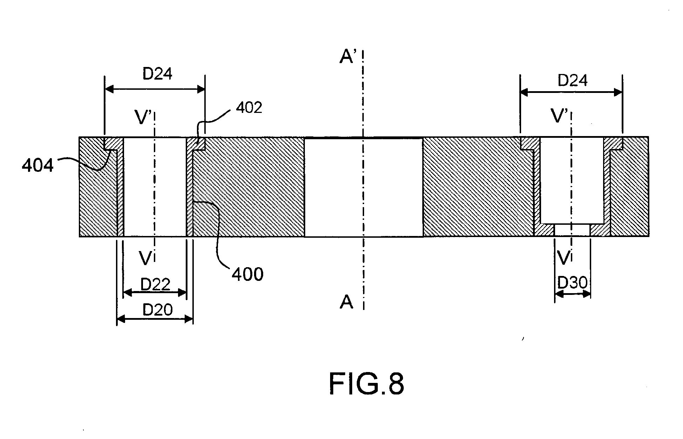

La figure 8 montre une vue en coupe axiale d'une autre variante du plateau de moulage de la figure 3a.

Dans cette autre variante de la figure 8, le plateau P2, par exemple, comporte dans chaque passage T1, T2,..Tj,...T12 de forme cylindrique circulaire une capsule de moulage 400 en forme de tube de diamètre externe D20 et de diamètre interne D22 comportant un bord 402 de plus grand diamètre D24 que le diamètre externe D20 s'insérant dans un évidement 404 du coté de la surface supérieur Fs du plateau de moulage de façon à réaliser un blocage en position de la capsule de moulage 400 dans le passage Tj du plateau de moulage.

Dans une variante, la capsule de moulage 400, peut comporter une couronne 420 du côte d'une de ses extrémités pour former une réduction de diamètre D30 du relais moulé par cette capsule.

Le dispositif de moulage n'est pas limitatif à des plateaux de moulage pouvant glisser les uns par rapport aux autres par rotation au tour de l'axe d'empilement AA' pour la réalisation des éléments moulés, d'autres types de mouvement peuvent être envisagés, par exemple par glissement en translation d'un plateau sur l'autre. Dans ce cas de glissement par translation, les plateaux de moulages sont par exemple guidés par des rails droits pour les faire glisser sur leurs faces principales les uns par rapport aux autres et ainsi créer les alvéoles contenant la matière polymérisable.

Les surfaces principales des plateaux de moulage P1, P2, P3, P4, P5, P6 ainsi que les passages T1, T2,..Tj,...T12 dans les plateaux de moulage et de distribution 30 peuvent être recouverts d'une fine couche de téflon ou autre produit de fonction équivalent de un ou deux dixièmes de mm, de façon à faciliter le glissement d'un plateau de moulage par rapport à l'autre et le démoulage des éléments moulés.

L'invention concerne aussi un procédé de moulage par la mise en oeuvre du dispositif de moulage selon l'invention.

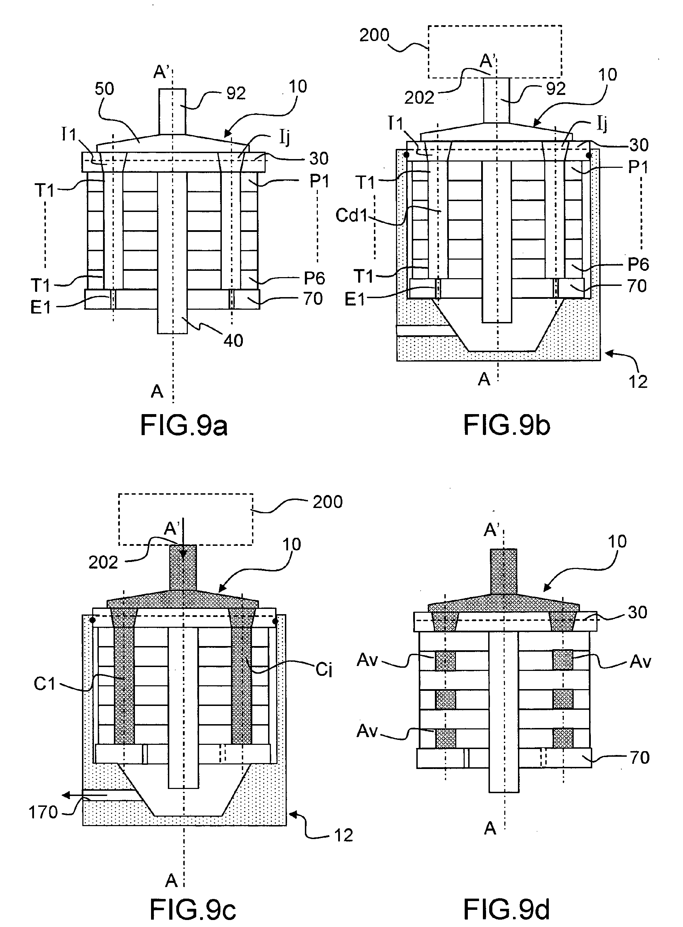

Les figures 9a, 9b, 9c et 9d représentent, sous forme de schémas de principe, les principales étapes de mise en oeuvre du dispositif de moulage selon l'invention représenté à la figure 1.

Un outil industriel d'injection de matière polymérisable 200 dans le dispositif de moulage selon l'invention comporte un accès 202 destiné à être raccordé à l'entrée 92 de matière polymérisable de l'ensemble de moulage 10. L'accès 202 de l'outil industriel d'injection est isolé du milieu ambiant pour pouvoir effectuer le vide dans la cloche du dispositif de moulage.

Les sous plateaux S1, S2, S3 étant au préalable empilés et rendus solidaires en rotation par des goupilles pour former le plateau de moulage P6, le procédé de moulage des relais pyrotechniques utilisant le dispositif de moulage de la figure 1 comporte au moins les étapes suivantes :
1) montage de l'ensemble de moulage 10 par :
   - empilage des plateaux de moulage P1 à P6 sur le plateau de distribution 30, l'arbre d'empilage 40 passant par les trous 60 des plateaux de moulage. L'empilement des plateaux est maintenu entre le plateau de distribution 30 et le plateau d'évent 70 par l'écrou 82 vissé sur la partie filetée 80 de l'arbre d'empilage 40,
   - alignement des canaux d'injection I1, I2 ... Ij,.. I12 du plateau de distribution 30 avec les passages T1, T2,..Tj,...T12 des plateaux moulage P1, P2, P3, P4, P5, P6, et les trous d'évent E1, E2,...Ej,...E12 du plateau d'évent 70, de mêmes rang j sur un même axe de passage VV' pour former 12 conduits Cd1, Cd2, ...Cdj,...Cd12 respectifs de passage de la matière polymérisable,
   - mise en place du plateau d'injection 50 maintenu par les dents horizontales de serrage 54 sur le plateau de distribution 30, (Voir figure 9a)
2) raccordement de l'entrée 92 de matière polymérisable de l'ensemble de moulage 10 à l'accès 202 de l'outil industriel d'injection 200 (voir figure 9b),
3) mise en place de la cloche 12 sur l'ensemble de moulage 10, le plateau d'évent 70 venant en contact par sa face externe 74 sur l'épaulement de plateau 135 de la cloche 12 et de façon que les goupilles d'entraînement 137 en rotation de la cloche 12 et du plateau d'évent soient insérées dans les trous borgnes 76 du plateau d'évent 70,
4) vissage de la butée centrale 150 dans l'insert 143 de fond de cloche pour venir au contact de l'arbre d'empilage 40 et ainsi supprimer le contact entre le plateau d'évents 70 et l'épaulement 135 de la cloche 12,
5) réalisation du vide dans la cloche 12 et par conséquent dans les passages T1, T2,..Tj,...T12 des plateaux de moulage par aspiration d'air par le trou d'évent 170 de la cloche 12 à travers les trous d'évent E1 à E12 dans le plateau d'évent 70,
6) rotation de la cloche 12 et du plateau d'évent 70 entraîné par les goupilles d'entrainement 137 produisant le désalignement des trous d'évent E1 à E12 avec les passages T1 à T12 des plateaux de moulage qui sont alors fermés par la face de serrage 72 du plateau d'évent 70,
7) dévissage de la de la butée centrale 150 pour établir le contact entre l'épaulement 135 de la cloche 12 et le plateau d'évent 70,
8) injection, à l'aide de l'outil industriel d'injection 200, de la matière polymérisable par l'arrivée 92 du dispositif de moulage passant par les canaux d'injection I1, I2 ,...Ij,.. I12 du plateau de distribution 30 puis dans les passages T1, T2,..Tj,...T12 alignés de même rang j des plateaux de moulage pour former 12 colonnes C1, C2,...Cj,...C12 de matière polymérisable dans les 12 conduits Cd1, Cd2, ...Cdj,...Cd12 respectifs de même rang j, (voir figure 9c),
9) suppression du vide dans la cloche 12,
10) retrait de la cloche 12 de l'ensemble de moulage 10,
11) rotation des plateaux de moulage libres P1, P3 et P5 autour de l'arbre d'empilage 40 de façon à sectionner les respectives colonnes C1, C2,...Cj,...C12 de matière polymérisable et séparer les passages des plateaux de moulage formant 72 cavités Av contenant les relais pyrotechniques, (voir figure 7d), les passages du plateau de moulage P1 étant fermés, du côte de sa face supérieure Fs, par la face d'empilage 32 du plateau de distribution 30 et les passages du plateau de moulage P6 étant fermés, du côte de sa face inférieure Fi par la face de serrage 72 du plateau d'évent 70,
12) retrait de l'ensemble de moulage 10 de l'outil industriel d'injection 200,
13) démontage du plateau d'injection 50 du plateau de distribution 30, et enlèvement de la matière polymérisable des trous du plateau de distribution 30, le reste de l'ensemble de moulage passe en polymérisation,
14) polymérisation des relais pyrotechniques dans les cavités Av formées par passages T1, T2,..Tj,...T12 fermés,
15) démoulage des relais par leur retrait des passages des plateaux de moulage.

La polymérisation peut être accélérée par mise en étuve et montée en température de l'ensemble de moulage.

Comme pour l'alignement des passages cylindriques de même rang j des plateaux de moulage avant l'injection de matière polymérisable, la rotation des plateaux de moulages libres après l'injection de matière polymérisable s'effectue d'un angle prédéterminé à l'aide d'un repère de rotation sur chaque bord des plateaux de moulage pour que les alvéoles Av soient bien fermés par la rotation de plateaux de moulage.

La cloche 12 est réalisée en matière plastique transparente permettant de surveiller des éventuelles fuites de matière dans l'ensemble de moulage.

Le dispositif et le procédé selon l'invention permettent de réaliser en grande série des petits relais d'amorçage exempts de bulles d'air et de fissures. Ce relais d'amorçage répondant aux normes de muratisation (normes MURAT) et conformes aux dossiers de normalisations en vigueur.

L'invention n'est pas limitative à la réalisation de relais d'amorçage pyrotechniques, d'autres éléments non explosifs en matière polymérisable peuvent être réalisés par l'utilisation du dispositif de moulage selon l'invention.

Comme cela à été dit précédemment, l'architecture du dispositif de moulage selon l'invention décrit, est celle d'un prototype de faisabilité et donc la plus simple possible adaptable sur l'outil industriel en place, en négligeant sciemment certains détails qui amélioreraient considérablement l'aspect industriel du dispositif de moulage mais qui à ce stade de l'étude n'étaient pas dimensionnants, par exemple, la rotation des plateaux les uns par rapport aux autres est dans ce prototype de faisabilité faite manuellement après avoir extrait la cloche à vide. Pour une industrialisation de ce procédé de réalisation de relais en grande série, la rotation de ces plateaux serait automatisée à distance et pourrait être réalisée sans avoir à retirer la cloche.

## Revendications

1. Dispositif de moulage en collectif d'éléments (m1, m2, mi) en matière polymérisable,
comportant un ensemble de moulage (10) et une cloche (12) destinée à maintenir l'ensemble de moulage sous vide, l'ensemble de moulage ayant un empilage de n plateaux de moulage (P1, P2,...Pi,...Pn) selon un axe d'empilement (AA'), chacun des plateaux de moulage ayant, deux faces principales parallèles, une face principale supérieure (Fs) et une face principale inférieure (Fi), k passages (T1, T2,..Tj,...Tk) entre sa face principale supérieure et sa face principale inférieure, j étant le rang du passage compris entre 1 et k, **caractérisé en ce que** les plateaux de moulage pouvant glisser les uns par rapport aux autres dans les plans des faces principales pour être mis, soit dans une position dite d'injection sous vide, dans laquelle les passages (T1, T2,..Tj,...Tk) sous vide de même rang j des n plateaux de moulage (P1, P2,...Pi,...Pn) sont alignés pour former k conduits (Cd1, Cd2, ...Cdj,...Cdk) destinés à être remplis ensemble par la matière polymérisable, soit dans une position dite de fermeture telle que les k dits passages (T1, T2,..Tj,...Tk) d'un plateau (Pi) de rang i considéré contenant la matière polymérisable soient fermés d'un côté par la face inférieure (Fi) du plateau de moulage (P(i-1)) précèdent et de l'autre côté par la face supérieure (Fs) du plateau de moulage suivant (P(i+1)) de l'empilement formant des cavités (Av) de la forme des passages contenant la matière polymérisable, l'empilement des n plateaux de moulage étant enserré entre un plateau de distribution (30) de la matière polymérisable dans les passages (T1, T2,..Tj,...Tk) sous vide et un plateau d'évent (70) pour faciliter l'obtention du vide dans les dits passages et la fermeture, du côte du plateau d'évent (70), des k conduits (Cd1, Cd2, ...Cdj,...Cdk) avant l'injection de la matière polymérisable.

2. Dispositif de moulage selon la revendication 1, **caractérisé en ce que** le plateau d'évent (70) comporte k trous d'évent (E1, E2,..Ej,...Ek) tels que, dans une position dite de réalisation du vide dans l'ensemble de moulage, les k trous d'évent sont alignés avec les k passages (T1, T2,..Tj,...Tk) des n plateaux de moulage (P1, P2,...Pi,...Pn), de façon à faciliter l'établissement du vide dans les passages des n plateaux de moulage avant l'injection de la matière polymérisable.

3. Dispositif de moulage selon l'une des revendications 1 ou 2, **caractérisé en ce que** le plateau de distribution (30) comporte k canaux d'injections (I1, I2 ,...Ij,.. Ik) répartis de façon que, dans la position dite d'injection sous vide, les k trous d'injection sont alignés avec les k passages des n plateaux de moulage (P1, P2,...Pi,...Pn) de façon à injecter sous vide la matière polymérisable dans les dits k passages.

4. Dispositif de moulage selon l'une des revendications 1 à 3, **caractérisé en ce qu'**au moins un plateau de moulage Pi de l'empilement des n plateaux de moulage est constitué de w sous plateaux (S1, S2,.. St,...Sw), w étant égal ou supérieur à 2, les w sous plateaux étant empilés et rendus solidaires pour former les passages (T1, T2,..Tj,...Tk) du plateau de moulage Pi.

5. Dispositif de moulage selon l'une des revendications 1 à 4, **caractérisé en ce que** les passages (T1, T2,..Tj,...Tk) sont de forme choisie parmi les formes, concaves, convexes, tronconiques ou autre formes diverses.

6. Dispositif de moulage selon la revendication 5, **caractérisé en ce que** les passages (T1, T2,..Tj,...Tk) sont de forme cylindrique d'axe de révolution (VV').

7. Dispositif de moulage selon la revendication 4, **caractérisé en ce que** le sous plateau de premier rang S1 et le sous plateau de dernier rang (Sw) ont des passages (T1, T2,..Tj,...Tk) de forme tronconique pour former des chanfreins sur les éléments moulés.

8. Dispositif de moulage selon l'une des revendications 1 à 4, **caractérisé en ce qu'**au moins un plateau de moulage , comporte dans au moins un passage (Tj), deux demi coquilles (300, 302, 340, 342) de moulage d'une élément (306, 350) en matière polymérisable de part et d'autre d'un plan (Ps) passant par l'axe de révolution (VV') du passage (Tj).

9. Dispositif de moulage selon la revendication 8, **caractérisé en ce que** les deux demi-coquilles (340, 342) comportent au moins deux bords (320, 322) partiellement en contact pour réaliser un passage entre les deux demi coquilles pour la matière polymérisable, les dits passages étant configurés pour former des excroissances (360, 362) dans le corps de l'élément moulé (350) ayant une section, dans un plan perpendiculaire au passage, de forme prédéterminée choisie parmi les formes semi sphérique, tronconique, rectangulaire, triangulaire ou autres formes souhaitées.

10. Dispositif de moulage selon l'une des revendications 1 à 4, **caractérisé en ce qu'**au moins un plateau de moulage, comporte dans au moins un passage (T1, T2,..Tj,...T12) une capsule de moulage.

11. Dispositif de moulage selon l'une des revendications 1 à 10, **caractérisé en ce que** les n plateaux de moulage sont de forme cylindrique circulaire, chacun des n plateaux de moulage comportant un trou (60) dans l'axe d'empilement (AA') pour le passage d'un arbre d'empilage (40) solidaire, par une de ses deux extrémités, du plateau de distribution (30), un plateau de moulage (Pi) de rang i étant solidaire en rotation de l'arbre d'empilage, le plateau de moulage précédent (P(i-1)) ou suivant (P(i+1)) est libre en rotation par rapport audit arbre d'empilage (40) de façon à produire un glissement d'un plateau de moulage par rapport au suivant et au précédent vers la position dite de fermeture.

12. Dispositif de moulage selon l'une des revendications 1 à 10, **caractérisé en ce que** les n plateaux de moulage sont de forme rectangulaire chacun des plateaux de moulage étant guidé longitudinalement dans un plan parallèle à ses faces principales (Fs, Fi) de façon à produire un glissement d'un plateau par rapport au suivant et au précédent vers la position dite de fermeture.

13. Dispositif de moulage selon la revendication 11, **caractérisé en ce que** la cloche (12) est de forme cylindrique circulaire de diamètre externe (D1), d'axe de révolution (CC'), comportant, d'une extrémité à l'autre de la cloche, un fond de cloche (120) et un bord de cloche (122), du côté du fond de cloche (120) une paroi de fond (124) de cloche d'épaisseur (H2) comportant un trou lisse (126) débouchant à l'intérieur de la cloche, la paroi de fond de cloche (124) comportant, à l'intérieur de la cloche (12) une surface plane circulaire (128) de diamètre (D2) s'élargissant sous forme d'une ouverture (130) de forme conique jusqu'à un diamètre (D3) sur une hauteur (H3) à l'intérieur de la cloche, l'ouverture conique (130) étant raccordée à une ouverture cylindrique circulaire (134) de diamètre (D4) plus grand que le diamètre (D3) de l'ouverture conique pour former un épaulement de plateau (135) sur une hauteur (H4) comportant des trous (136) de goupilles pour l'insertion de goupilles d'entraînement (137) en rotation du plateau d'évent (70) de l'ensemble de moulage (10), l'ouverture cylindrique circulaire (134) étant raccordée par un autre épaulement (138) à une dernière ouverture (139) de la cloche de diamètre (D5) supérieure au diamètre (D4) de l'ouverture cylindrique circulaire (134) et inférieure au diamètre externe (D1) de la cloche pour former une paroi (140) de bord de cloche se terminant par le bord de cloche (122).

14. Dispositif de moulage selon la revendication 13, **caractérisé en ce que** la paroi (140) de bord de cloche comporte une gorge (141) débouchant à l'intérieure de la cloche (12) contenant un joint de plateau (142) en contact avec un bord circulaire (42) du plateau de distribution (30) pour réaliser l'étanchéité par rapport au milieu externe entre l'ensemble de moulage (10) et la cloche (12).

15. Dispositif de moulage selon la revendication 14, **caractérisé en ce qu'**un insert (143) de fond de cloche comportant une tête plate (144) et un corps (146) cylindrique ayant dans l'axe (CC') de révolution un trou taraudé (148) débouchant à l'intérieur de la cloche (12), l'insert (143) de fond de cloche étant maintenu par un écrou (149) dans le trou lisse (126) du fond de cloche (120) de façon qu'une surface inférieure de la tête (144) de l'insert (143) de fond de cloche vienne en butée avec la surface plane circulaire (128) de la paroi (124) de fond de cloche.

16. Dispositif de moulage selon la revendication 15, **caractérisé en ce que** l'insert (143) de fond de cloche comporte une butée centrale (150) vissée dans le trou taraudé (148) de l'insert (142) de fond de cloche, le vissage ou le dévissage de la butée centrale (150) dans l'insert (143) de fond de cloche permettant de faire évoluer au cours du cycle de réalisation des éléments moulés, l'appui de la cloche sur l'ensemble de moulage afin de limiter ou au contraire augmenter selon l'opération du cycle effectuée, l'effort de placage des plateaux entre eux.

17. Dispositif de moulage selon l'une des revendications 1 à 16, **caractérisé en ce que** les faces principales (Fs, Fi) des n plateaux de moulage (P1, P2,...Pi,...Pn), ainsi que les k passages cylindriques (T1, T2,..Tj,...Tk) sont recouverts d'un revêtement anti friction de un ou deux dixièmes de mm, de façon à faciliter le glissement d'un plateau de moulage par rapport à l'autre et le démoulage des éléments moulés.

18. Dispositif de moulage selon l'une des revendications 1 à 17, **caractérisé en ce que** l'élément moulé (m1, m2) est un relais d'amorçage pyrotechnique, la matière polymérisable étant une molécule explosive enrobée d'un liant

19. Procédé de moulage mettant en oeuvre un dispositif de moulage en collectif d'éléments en matière polymérisable selon l'une des revendications précédentes,
**caractérisé en ce qu'**il comporte au moins les étapes suivantes :
- montage de l'ensemble de moulage (10) par l'empilement des n plateaux de moulage (P1, P2,...Pi,...Pn) enserrés entre le plateau de distribution (30) de matière polymérisable et le plateau d'évent (70),
- alignement des k passages (T1, T2,..Tj,...Tk) des n plateaux de moulage (P1, P2,...Pi,...Pn) les passages (Tj) de même rang j des n plateaux de moulage étant alignes pour former k conduits (Cd1, Cd2, ...Cdj,...Cdk) dans les n plateaux de moulage de la matière polymérisable,
- mise en place de la cloche (12) sur l'ensemble de moulage (10) isolant ainsi les plateaux de moulage du milieu extérieur à la cloche,
- réalisation du vide dans la cloche (12) et dans les passages (T1, T2,..Tj,...Tk) des n plateaux de moulage par aspiration d'air dans la cloche,
- fermeture des conduits (Cd1, Cd2, ...Cdj,...Cdk) du côté du plateau d'évent (70) par un glissement du plateau d'évent par rapport à l'empilement des n plateaux de moulage (P1, P2, ... Pi, ... Pn),
- injection par le plateau de distribution (30) de la matière polymérisable dans les k conduits (Cd1, Cd2, ... Cdj, ... Cdk) pour former k colonnes respectives (C1, C2,...Cj,...Ck) de matière polymérisable,
- déplacement des plateaux de moulage les uns par rapport aux autres par glissement sur leurs surfaces principales (Fs, Fi) en contact de façon à sectionner les k colonnes respectives (C1, C2,...Cj,...Ck) de matière polymérisable formant des cavités (Av) contenant les éléments moulés en matière polymérisable,
- suppression du vide dans la cloche (12),
- retrait de la cloche (12) de l'ensemble de moulage (10),
- polymérisation des éléments (m1, m2) dans les cavités (Av) formées par les passages cylindriques fermés par les surfaces principales (Fs, Fi) des plateaux de moulage,
- séparation des plateaux de moulage et démoulage des éléments moulés dans les cavités (Av) par leur retrait des passages cylindriques des plateaux de moulage.

20. Procédé de moulage selon la revendication 19, les n plateaux de moulage étant de forme cylindrique circulaire chacun des n plateaux comportant un trou (60) dans l'axe d'empilement (AA') pour le passage d'un arbre d'empilage (40), solidaire par une de ses deux extrémités, du plateau de distribution (30), un plateau de moulage de rang Pi étant solidaire en rotation de l'arbre d'empilage (40), le plateau de moulage précédent (P(i-1)) ou suivant (P(1+1)) étant libre en rotation par rapport audit arbre,
**caractérisé en ce que** la position de fermeture est obtenue par rotation d'un plateau de moulage (Pi) par rapport au suivant (P(i+1)) et au précédent (P(i-1)).

21. Procédé de moulage selon la revendication 20, les n plateaux de moulage étant de forme rectangulaire et guidés longitudinalement dans un plan parallèle à ses faces principales (Fs, Fi),
**caractérisé en ce que** la position de fermeture est obtenue par le glissement d'un plateau de moulage (Pi) par rapport au suivant (P(i+1)) et au précédent (P(i-1)).

## Patentansprüche

1. Vorrichtung zum kollektiven Formen von Elementen (m1, m2, mi) aus einem polymerisierbaren Material,die eine Formbaugruppe (10) und eine Glocke (12) umfasst, um die Formbaugruppe unter Vakuum zu halten, wobei die Formbaugruppe einen Stapel von n Formplatten (P1, P2,...Pi,...Pn) entlang einer Stapelachse (AA') hat, wobei jede der Formplatten zwei parallele Hauptflächen, eine obere Hauptfläche (Fs) und eine untere Hauptfläche (Fi), k Kanäle (T1, T2,..Tj,...Tk) zwischen ihrer oberen Hauptfläche und ihrer unteren Hauptfläche hat, wobei j die Reihe des Kanals zwischen 1 und k ist, **dadurch gekennzeichnet, dass** die Formplatten relativ zueinander in den Ebenen der Hauptflächen gleiten können, um entweder in einer Injektion-unter-Vakuum-Position genannten Position, in der die evakuierten Kanäle (T1, T2,...Tj,...Tk) derselben Reihe j der n Formplatten (P1, P2,...Pi,...Pn) so ausgerichtet sind, dass k Leitungen (Cd1, Cd2,...Cdj,...Cdk) entstehen, die zum gemeinsamen Füllen mit polymerisierbarem Material bestimmt sind, oder in einer Schließposition genannten Position platziert zu werden, so dass die k Kanäle (T1, T2,...Tj,...Tk) einer Platte (Pi) einer betrachteten Reihe i, die das polymerisierbare Material enthalten, auf einer Seite durch die untere Fläche (Fi) der vorherigen Formplatte (P(i-1)) und auf der anderen Seite durch die obere Fläche (Fs) der folgenden Formplatte (P(i+1)) des Stapels geschlossen werden und Hohlräume (Av) in der Form der das polymerisierbare Material enthaltenden Kanäle bilden, wobei der Stapel der n Formplatten zwischen einer Verteilungsplatte (30) des polymerisierbaren Materials in den evakuierten Kanälen (T1, T2,...Tj,...Tk) und einer Lüftungsplatte (70) eingespannt ist, um das Evakuieren der Kanäle und des Verschlusses, auf der Seite der Lüftungsplatte (70), der k Leitungen (Cd1, Cd2,...Cdj,...Cdk) vor dem Injizieren des polymerisierbaren Materials zu erleichtern.

2. Formvorrichtung nach Anspruch 1, **dadurch gekennzeichnet, dass** die Lüftungsplatte (70) k Lüftungslöcher (E1, E2,...Ej,...Ek) aufweist, so dass, in einer Formbaugruppenevakuierungsposition genannten Position, die k Lüftungslöcher mit den k Kanälen (T1, T2,...Tj,...Tk) der n Formplatten (P1, P2,...Pi,...Pn) ausgerichtet sind, um das Evakuieren der Kanäle der n Formplatten vor dem Injizieren des polymerisierbaren Materials zu erleichtern.

3. Formvorrichtung nach Anspruch 1 oder 2, **dadurch gekennzeichnet, dass** die Verteilungsplatte (30) k Injektionskanäle (I1, I2,...Ij,..Ik) umfasst, die so verteilt sind, dass in der evakuierte Injektionsposition genannten Position die k Injektionslöcher mit den k Kanälen der n Formplatten (P1, P2,...Pi,...Pn) ausgerichtet sind, so dass das polymerisierbare Material unter Vakuum in die k Kanäle injiziert wird.

4. Formvorrichtung nach einem der Ansprüche 1 bis 3, **dadurch gekennzeichnet, dass** wenigstens eine Formplatte Pi des Stapels von n Formplatten von w Teilplatten (S1, S2,..St,...Sw) gebildet wird, wobei w gleich oder größer als 2 ist, wobei die w Teilplatten gestapelt und einstückig gemacht werden, um die Kanäle (T1, T2,...Tj,...Tk) der Formplatte Pi zu bilden.

5. Formvorrichtung nach einem der Ansprüche 1 bis 4, **dadurch gekennzeichnet, dass** die Form der Kanäle (T1, T2,...Tj,...Tk) aus konkaven, konvexen, kegelstumpfförmigen oder anderen Formen ausgewählt ist.

6. Formvorrichtung nach Anspruch 5, **dadurch gekennzeichnet, dass** die Kanäle (T1, T2,...Tj,...Tk) eine zylindrische Drehachsenform (VV') haben.

7. Formvorrichtung nach Anspruch 4, **dadurch gekennzeichnet, dass** die Teilplatte der ersten Reihe S1 und die Teilplatte der letzten Reihe (Sw) kegelstumpförmige Kanäle (T1, T2,...Tj,...Tk) haben, um Schrägungen an den geformten Elementen zu bilden.

8. Formvorrichtung nach einem der Ansprüche 1 bis 4, **dadurch gekennzeichnet, dass** wenigstens eine Formplatte in wenigstens einem Kanal (Tj) zwei Formhalbschalen (300, 302, 340, 342) eines Elements (306, 350) aus polymerisierbarem Material auf beiden Seiten einer Ebene (Ps) umfasst, die durch die Drehachse (VV') des Kanals (Tj) verläuft.

9. Formvorrichtung nach Anspruch 8, **dadurch gekennzeichnet, dass** die beiden Halbschalen (340, 342) wenigstens zwei Ränder (320, 322) aufweisen, die teilweise in Kontakt sind, um einen Kanal zwischen den beiden Halbschalen für das polymerisierbare Material zu bilden, wobei die Kanäle so konfiguriert sind, dass sie Vorsprünge (360, 362) im Körper des geformten Elements (350) mit einem Querschnitt, in einer Ebene lotrecht zu dem Kanal, einer vorbestimmten Form ausgewählt aus halbkugelförmig, kegelstumpfförmig, rechteckig, dreieckig und anderen gewünschten Formen bilden.

10. Formvorrichtung nach einem der Ansprüche 1 bis 4, **dadurch gekennzeichnet, dass** wenigstens eine Formplatte eine Formkapsel in wenigstens einem Kanal (T1, T2,...Tj,...Tk) umfasst.

11. Formvorrichtung nach einem der Ansprüche 1 bis 10, **dadurch gekennzeichnet, dass** die n Formplatten eine kreiszylindrische Form haben, wobei jede der n Formplatten ein Loch (60) in der Stapelachse (AA') aufweist, durch das ein Stapelschaft (40) verlaufen kann, der an einem seiner beiden Enden einstückig mit der Verteilungsplatte (30) ist, wobei eine Formplatte (Pi) von Reihe i rotationsintegral mit dem Stapelschaft ist, wobei die vorherige (P(i-1)) oder die folgende (P(i+1)) Formplatte relativ zu dem Stapelschaft (40) frei rotieren kann, um eine Formplatte in Bezug auf die folgende und die vorherige Platte in die Schließposition genannte Position schieben zu können.

12. Formvorrichtung nach einem der Ansprüche 1 bis 10, **dadurch gekennzeichnet, dass** die n Formplatten rechteckig sind, wobei jede der Formplatten longitudinal in einer Ebene parallel zu ihren Hauptflächen (Fs, Fi) geführt wird, so dass eine Platte in Bezug auf die folgende und die vorherige Platte in die Schließposition genannte Position schieben zu können.

13. Formvorrichtung nach Anspruch 11, **dadurch gekennzeichnet, dass** die Glocke (12) einen kreiszylinderförmigen Außendurchmesser (D1) und eine Drehachse (CC') hat und von einem Ende der Glocke zum andern eine Glockenbasis (120) und einen Glockenrand (122) und auf der Seite der Glockenbasis (120) eine Glockenbasiswand (124) mit einer Dicke (H2) hat, die ein ins Glockeninnere mündendes glattes Loch (126) aufweist, wobei die Glockenbasiswand (124) innerhalb der Glocke (12) eine kreisförmige glatte Fläche (128) mit einem Durchmesser (D2) hat, der sich in Form einer konischen Öffnung (130) bis zu einem Durchmesser (D3) in einer Höhe (H3) innerhalb der Glocke verbreitert, wobei die konische Öffnung (130) mit einer kreiszylindrischen Öffnung (134) verbunden ist, deren Durchmesser (D4) größer ist als der Durchmesser (D3) der konischen Öffnung, um in einer Höhe (H4) einen Plattenansatz (135) zu bilden, der Stiftlöcher (136) zum Einführen von Stiften (137) umfasst, um die Lüftungsplatte (70) der Formbaugruppe (10) in Drehung zu versetzen, wobei die kreiszylindrische Öffnung (134) durch einen anderen Ansatz (138) mit einer letzten Öffnung (139) der Glocke mit einem Durchmesser (D5) verbunden ist, der größer ist als der Durchmesser (D4) der kreiszylindrischen Öffnung (134) und kleiner ist als der Außendurchmesser (D1) der Glocke, um eine am Glockenrand (122) endende Glockenseitenwand (140) zu bilden.

14. Formvorrichtung nach Anspruch 13, **dadurch gekennzeichnet, dass** die Glockenrandwand (140) eine Nut (141) aufweist, die ins Glockeninnere (12) mündet und eine Plattendichtung (142) in Kontakt mit einem kreisförmigen Rand (42) der Verteilungsplatte (30) enthält, um die Dichtigkeit relativ zur Außenumgebung zwischen der Formbaugruppe (10) und der Glocke (12) zu bilden.

15. Formvorrichtung nach Anspruch 14, **dadurch gekennzeichnet, dass** ein Glockenbasiseinsatz (143) einen flachen Kopf (144) und einen zylindrischen Körper (146) aufweist, der in der Drehachse (CC') eine Gewindebohrung (148) aufweist, die ins Glockeninnere (12) mündet, wobei der Glockenbasiseinsatz (143) von einer Mutter (149) in dem glatten Loch (126) der Glockenbasis (120) gehalten wird, so dass eine Unterseite des Kopfes (144) des Glockenbasiseinsatzes (143) an der kreisförmigen ebenen Fläche (128) der Glockenbasiswand (124) zur Anlage kommt.

16. Formvorrichtung nach Anspruch 15, **dadurch gekennzeichnet, dass** der Glockenbasiseinsatz (143) einen in die Gewindebohrung (148) des Glockenbasiseinsatzes (142) geschraubten zentralen Anschlag (150) aufweist, wobei durch Ein- und Ausschrauben des zentralen Anschlags (150) in die/aus der Glockenbasis die geformten Elemente im Laufe des Produktionszyklus der Anlage der Glocke an der Formbaugruppe folgen können, um die Kraft des Arretierens der Platten aneinander je nach dem durchgeführten Vorgang des Zyklus zu begrenzen oder im Gegenteil zu erhöhen.

17. Formvorrichtung nach einem der Ansprüche 1 bis 16, **dadurch gekennzeichnet, dass** die Hauptflächen (Fs, Fi) der n Formplatten (P1, P2,...Pi,...Pn) sowie die k zylindrischen Kanäle (T1, T2,...Tj,...Tk) mit einer Antifriktionsbeschichtung von einem oder zwei Zehntel Millimeter bedeckt sind, um das Gleiten einer Formplatte relativ zur ändern und das Herausnehmen der geformten Elemente aus der Form zu erleichtern.

18. Formvorrichtung nach einem der Ansprüche 1 bis 17, **dadurch gekennzeichnet, dass** das geformte Element (m1, m2) ein pyrotechnisches Zündrelais ist, wobei das polymerisierbare Material ein mit einem Bindemittel beschichtetes explosives Molekül ist.

19. Formverfahren, ausgeführt mit einer Vorrichtung zum kollektiven Formen von Elementen aus einem polymerisierbaren Material nach einem der vorherigen Ansprüche,
**dadurch gekennzeichnet, dass** es wenigstens die folgenden Schritte beinhaltet:
- Montieren der Formbaugruppe (10) mit dem Stapel von n Formplatten (P1, P2,...Pi,...Pn), die zwischen der Verteilungsplatte (30) aus polymerisierbarem Material und der Lüftungsplatte (70) eingespannt sind;
- Ausrichten der k Kanäle (T1, T2,...Tj,...Tk) der n Formplatten (P1, P2,...Pi,...Pn), wobei die Kanäle (Tj) derselben Reihe j der n Formplatten so ausgerichtet werden, dass k Leitungen (Cd1, Cd2,...Cdj,...Cdk) in den n Formplatten des polymerisierbaren Materials entstehen;
- Platzieren der Glocke (12) an der Formbaugruppe (10), um so die Formplatten von der Umgebung außerhalb der Glocke zu isolieren;
- Evakuieren der Glocke (12) und der Kanäle (T1, T2,...Tj,...Tk) der n Formplatten durch Absaugen von Luft aus der Glocke;
- Schließen der Leitungen (Cd1, Cd2,...Cdj,...Cdk) auf der Seite der Lüftungsplatte (70) durch Verschieben der Lüftungsplatte in Bezug auf den Stapel der n Formplatten (P1, P2,...Pi,...Pn);
- Injizieren, über die Verteilungsplatte (30), des polymerisierbaren Materials in die k Leitungen (Cd1, Cd2,...Cdj,...Cdk), um k jeweilige Säulen (C1, C2,...Cj,...Ck) aus polymerisierbarem Material zu bilden;
- Bewegen der Formplatten relativ zueinander durch Schieben ihrer Hauptflächen (Fs, Fi) in Kontakt zum Sektionieren der k jeweiligen Säulen (C1, C2,...Cj,...Ck) aus polymerisierbarem Material, die Hohlräume (Av) bilden, die die geformten Elemente aus polymerisierbarem Material enthalten;
- Ablassen des Vakuums aus der Glocke (12);
- Abziehen der Glocke (12) von der Formbaugruppe (10);
- Polymerisieren der Elemente (m1, m2) in den Hohlräumen (Av), die durch die zylindrischen Kanäle gebildet werden, die durch die Hauptflächen (Fs, Fi) der Formplatten geschlossen werden;
- Trennen der Formplatten und Herausnehmen der geformten Elemente in den Hohlräumen (Av) aus der Form durch Abziehen derselben aus den zylindrischen Kanälen der Formplatten.

20. Formverfahren nach Anspruch 19, wobei die n Formplatten eine kreiszylindrische Form haben, wobei jede der n Platten ein Loch (60) in der Stapel achse (AA') aufweist, durch das ein Stapelschaft (40) an einem seiner beiden Enden einstückig mit der Verteilungsplatte (30) passieren kann, wobei eine Formplatte der Reihe Pi rotationsintegral mit dem Stapelschaft (40) ist, wobei die vorherige (P(i-1)) oder die folgende (P(i+1)) Formplatte relativ zu dem Schaft frei rotieren kann,
**dadurch gekennzeichnet, dass** die Verschlussposition durch Drehen einer Formplatte (Pi) relativ zur folgenden (P(i+1)) und zur vorherigen (P(i-1)) Platte erreicht wird.

21. Formverfahren nach Anspruch 20, wobei die n Formplatten eine rechteckige Form haben und longitudinal in einer Ebene parallel zu ihren Hauptflächen (Fs, Fi) geführt werden,
**dadurch gekennzeichnet, dass** die Verschlussposition durch Verschieben einer Formplatte (Pi) relativ zur folgenden (P(i+1)) und zur vorherigen (P(i-1)) Platte erreicht wird.

## Claims

1. A device for the collective moulding of elements (m1, m2, mi) made from polymerizable material, comprising a moulding assembly (10) and a bell (12) designed to keep said moulding assembly under vacuum, said moulding assembly having a stack of n moulding plates (P1, P2,...Pi,...Pn) along a stacking axis (AA'), each of said moulding plates having two main parallel faces, one main upper face (Fs) and one main lower face (Fi), k passages (T1, T2,..Tj,...Tk) between its main upper face and its main lower face, with j being the row of the passage from between 1 and k, **characterised in that** said moulding plates can slide relative to each other in the planes of the main faces so as to be placed either in a position, referred to as injection-under-vacuum position, in which the passages (T1, T2,...Tj,...Tk) under vacuum of the same row j of the n moulding plates (P1, P2,...Pi,...Pn) are aligned so as to form k conduits (Cd1, Cd2,...Cdj,...Cdk) designed to be collectively filled by the polymerizable material, or in a position, referred to as closure position, such that said k passages (T1, T2,...Tj,...Tk) of a plate (Pi) of a considered row i containing the polymerizable material are closed on one side by the lower face (Fi) of the preceding moulding plate (P(i-1)) and on the other side by the upper face (Fs) of the following moulding plate (P(i+1)) of the stack forming cavities (Av) in the shape of passages containing the polymerizable material, with the stack of the n moulding plates being clamped between a distribution plate (30) of the polymerizable material in the passages (T1, T2,...Tj,...Tk) under vacuum and a breather plate (70) to facilitate obtaining the vacuum in said passages and the closure, on the side of the breather platform (70), of the k conduits (Cd1, Cd2,...Cdj,...Cdk) before the injection of the polymerizable material.

2. The moulding device according to claim 1, **characterised in that** said breather plate (70) comprises k breather holes (E1, E2,...Ej,...Ek) such that, in a position referred to as vacuum-production-position in the moulding assembly, the k breather holes are aligned with the k passages (T1, T2,...Tj,...Tk) of the n moulding plates (P1, P2,...Pi,...Pn) so as to facilitate the establishment of a vacuum in the passages of the n moulding plates before the injection of the polymerizable material.

3. The moulding device according to claim 1 or 2, **characterised in that** said distribution plate (30) comprises k injection channels (I1, I2,...Ij,..Ik) distributed so that, in the position referred to as vacuum-injection-position, the k injection holes are aligned with the k passages of the n moulding plates (P1, P2,...Pi,...Pn) so as to inject the polymerizable material under vacuum into said k passages.

4. The moulding device according to any one of claims 1 to 3, **characterised in that** at least one moulding plate Pi of the stack of n moulding plates is constituted by w sub-plates (S1, S2,..St,...Sw), with w being equal to or greater than 2, the w sub-plates being stacked and rendered integral so as to form the passages (T1, T2,...Tj,...Tk) of the moulding plate Pi.

5. The moulding device according to any one of claims 1 to 4, **characterised in that** the shape of the passages (T1, T2,...Tj,...Tk) is selected from concave, convex, truncated or other miscellaneous shapes.

6. The moulding device according to claim 5, **characterised in that** the passages (T1, T2,...Tj,...Tk) are of cylindrical shape on the axis of revolution (VV').

7. The moulding device according to claim 4, **characterised in that** sub-plate of the first row S1 and sub-plate of the last row (Sw) have truncated shaped passages (T1, T2,...Tj,...Tk) so as to form chamfers on the moulded elements.

8. The moulding device according to any one of claims 1 to 4, **characterised in that** at least one moulding plate comprises, in at least one passage (Tj), two moulding half-shells (300, 302, 340, 342) of an element (306, 350) made from polymerizable material on either side of a plane (Ps) passing through the axis of revolution (VV') of the passage (Tj).

9. The moulding device according to claim 8, **characterised in that** said two half-shells (340, 342) comprise at least two edges (320, 322) that are partially in contact so as to realise a passage between the two half-shells for the polymerizable material, said passages being configured to form protuberances (360, 362) in the body of the moulded element (350) having a cross-section, in a plane perpendicular to the passage, of a predetermined shape selected from semi-spherical, truncated, rectangular, triangular or other desired shapes.

10. The moulding device according to any one of claims 1 to 4, **characterised in that** at least one moulding plate comprises a moulding capsule in at least one passage (T1, T2,...Tj,...Tk).

11. The moulding device according to any one of claims 1 to 10, **characterised in that** the n moulding plates are of a circular cylindrical shape, with each of the n moulding plates comprising a hole (60) in the stacking axis (AA') to allow the passage of a stacking shaft (40) that is, via one of its two ends, integral with the distribution plate (30), with a moulding plate (Pi) of row i being rotationally integral with the stacking shaft, with the preceding (P(i-1)) or following (P(i+1)) moulding plate being free to rotate relative to said stacking shaft (40) so as to be able to slide a moulding plate, in relation to the following and to the preceding plate, toward the position referred to as closure position.

12. The moulding device according to any one of claims 1 to 10, **characterised in that** the n moulding plates are rectangular shaped, with each of the moulding plates being longitudinally guided in a plane parallel to its main faces (Fs, Fi) so as to be able to slide a plate, in relation to the following and to the preceding plate, toward the position referred to as closure position.

13. The moulding device according to claim 11, **characterised in that** the bell (12) is of a circular cylindrical shape on its outer diameter (D1), with an axis of revolution (CC'), and comprises, from one end of the bell to the next, a bell base (120) and a bell edge (122), and, on the bell base (120) side, a bell base wall (124) of thickness (H2) comprising a smooth hole (126) opening out inside the bell, with the bell base wall (124) comprising, inside the bell (12), a circular flat surface (128) of diameter (D2) extending in the form of a conically shaped opening (130) up to a diameter (D3) at a height (H3) on the inside of the bell, said conical opening (130) being connected to a circular cylindrical opening (134), the diameter (D4) of which is greater than the diameter (D3) of the conical opening so as to form a plate shoulder (135) at a height (H4), which plate shoulder comprises pin holes (136) for the insertion of pins (137) for entraining in rotation the breather plate (70) of the moulding assembly (10), with the circular cylindrical opening (134) being connected by another shoulder (138) to a final opening (139) of the bell having a diameter (D5) that is bigger than the diameter (D4) of the circular cylindrical opening (134) and is smaller than the outer diameter (D1) of the bell so as to form a bell side wall (140) terminating at the bell edge (122).

14. The moulding device according to claim 13, **characterised in that** the bell edge wall (140) comprises a groove (141) opening out inside the bell (12) and containing a plate seal (142) in contact with a circular edge (42) of the distribution plate (30) so as to form the seal, relative to the external environment, between the moulding assembly (10) and the bell (12).

15. The moulding device according to claim 14, **characterised in that** a bell base insert (143) comprises a flat head (144) and a cylindrical body (146) with, in the axis (CC') of revolution, a tapped hole (148) opening out inside the bell (12), said bell base insert (143) being held by a nut (149) in the smooth hole (126) of the bell base (120) so that a lower surface of the head (144) of the bell base insert (143) comes into abutment with the circular flat surface (128) of the bell base wall (124).

16. The moulding device according to claim 15, **characterised in that** the bell base insert (143) comprises a central stop (150) screwed into the tapped hole (148) of the bell base insert (142), with the screwing in and out of the central stop (150) in the bell base insert (143) allowing, during the production cycle, the moulded elements to follow the abutment of the bell on the moulding assembly so as to limit or, on the contrary, increase the force of blocking the plates together, depending on the operation of the cycle performed.

17. The moulding device according to any one of claims 1 to 16, **characterised in that** the main faces (Fs, Fi) of the n moulding plates (P1, P2,...Pi,...Pn), as well as the k cylindrical passages (T1, T2,...Tj,...Tk), are coated with an anti-friction coating of one or two tenths of a millimetre so as to facilitate the sliding of one moulding plate relative to the next and the demoulding of the moulded elements.

18. The moulding device according to any one of claims 1 to 17, **characterised in that** the moulded element (m1, m2) is a pyrotechnic priming relay, with the polymerizable material being an explosive molecule coated with a binder.

19. A moulding method implementing a device for collectively moulding elements made from polymerizable material according to any one of the preceding claims,
**characterised in that** it comprises at least the following steps:
- mounting the moulding assembly (10) by the stack of n moulding plates (P1, P2,...Pi,...Pn) clamped between the distribution plate (30) made from polymerizable material and the breather plate (70);
- aligning the k passages (T1, T2,...Tj,...Tk) of the n moulding plates (P1, P2,...Pi,...Pn), with the passages (Tj) of the same row j of the n moulding plates being aligned so as to form k conduits (Cd1, Cd2,...Cdj,...Cdk) in the n moulding plates of the polymerizable material;
- installing the bell (12) on the moulding assembly (10) thus isolating the moulding plates from the environment outside of the bell;
- creating a vacuum in the bell (12) and in the passages (T1, T2,...Tj,...Tk) of the n moulding plates by drawing air out of the bell;
- closing the conduits (Cd1, Cd2,...Cdj,...Cdk) on the side of the breather plate (70) by sliding the breather plate relative to the stack of the n moulding plates (P1, P2,...Pi,...Pn);
- injecting, via the distribution plate (30), the polymerizable material into the k conduits (Cd1, Cd2,...Cdj,...Cdk) so as to form k respective columns (C1, C2,...Cj,...Ck) of polymerizable material;
- moving the moulding plates one relative to the other by sliding their main surfaces (Fs, Fi) into contact so as to isolate the k respective columns (C1, C2,...Cj,...Ck) of polymerizable material forming cavities (Av) containing the moulded elements made from polymerizable material;
- releasing the vacuum from the bell (12);
- withdrawing the bell (12) from the moulding assembly (10)
- polymerizing the elements (m1, m2) in the cavities (Av) formed by the cylindrical passages closed by the main surfaces (Fs, Fi) of the moulding plates;
- separating the moulding plates and demoulding the moulded elements in the cavities (Av) by withdrawing them from the cylindrical passages of the moulding plates.

20. The moulding method according to claim 19, with the n moulding plates being of a circular cylindrical shape, each of the n plates comprising a hole (60) in the stacking axis (AA') for the passage of a stacking shaft (40) that is integral, at one of its two ends, with the distribution plate (30), with a moulding plate of row Pi being rotationally integral with the stacking shaft (40), with the preceding (P(i-1)) or following (P(i+1)) moulding plate being free to rotate relative to said shaft,
**characterised in that** the closure position is reached by rotating a moulding plate (Pi) relative to the following (P(i+1)) and the preceding (P(i-1)) plate.

21. The moulding method according to claim 20, with the n moulding plates being of rectangular shape and longitudinally guided in a plane parallel to its main faces (Fs, Fi),
**characterised in that** the closure position is obtained by sliding a moulding plate (Pi) relative to the following (P(i+1)) and the preceding (P(i-1)) plate.
